# EUROPÄISCHE PATENTANMELDUNG

(11) **EP 1 736 372 A2**
(43) Veröffentlichungstag der Anmeldung: **27.12.2006**
(21) Anmeldenummer: 06012601.8
(22) Anmeldetag: 20.06.2006
(51) Int. Cl.: B60R 21/13

(54) **Überrollschutzsystem für ein Kraftfahrzeug, insbesondere für ein Cabriolet-Fahrzeug**

(30) Priorität: 22.06.2005 DE 102005028961
(71) Anmelder: Wilhelm Karmann GmbH, 49084 Osnabrück (DE)
(72) Erfinder:

(57) **Zusammenfassung**

Es wird ein Überrollschutzsystem (1) für ein Kraftfahrzeug, insbesondere für ein Cabriolet-Fahrzeug, mit einem gegenüber einem karosseriefesten ersten Modul (2) zwischen einer abgesenkten Ruhelage in einer oberen Stützlage verfahrbar ausgebildeten zweiten Modul (3) beschrieben, welches einen sich in Fahrzeugquerrichtung erstreckenden Überrollbügel (20) und zwei im Wesentlichen in Fahrzeughochrichtung verlaufende Schenkelelemente (20A, 20B) aufweist, welche durch zugeordnete Führungseinrichtungen (2A) des ersten Moduls geführt sind, wobei eine die Verlagerung der Schenkelelemente entlang der Führungseinrichtungen synchronisierende Synchronisationseinrichtung (25) vorgesehen ist, welche eine Synchronisationswelle (29) aufweist, die mit einem Zahnprofil (28B) jeweils mit einer an jedem Schenkelelement (20B) ausgebildeten Rastleiste (26A, 26B) in Eingriff steht, und wobei eine Verriegelungsvorrichtung (4), mittels der das zweite Modul (3) in einer von seiner Ruhelage abweichenden Position gegen einen in Richtung der Ruhelage wirkenden Kraftangriff abstützbar ist, wenigstens eine erste Rasteinrichtung (5A, 5B) aufweist, die zum Abstützen des zweiten Moduls mit einer zweiten Rasteinrichtung (6A, 6B) in Wirkverbindung bringbar ist und eine Bewegung des zweiten Moduls ausgehend von seiner Ruhelage in Richtung seiner Stützlage zulässt. Ein Rastelement (7A, 7B) der ersten Rasteinrichtung (5A, 5B) ist als ein Zahnprofilelement ausgeführt, welches in verriegeltem Betriebszustand der Verriegelungsvorrichtung sowohl mit der Synchronisationswelle (29) als auch mit wenigstens einer der Rastleisten (26A, 26B) wirkverbunden ist.

## Beschreibung

Die Erfindung betrifft ein Überrollschutzsystem für ein Kraftfahrzeug, insbesondere für ein Cabriolet-Fahrzeug, mit einem gegenüber einem karosseriefesten ersten Modul von einer abgesenkten Ruhelage in eine obere Stützlage verfahrbaren zweiten Modul.

Aus der DE 103 18 594 A1 ist eine Überrollschutz-Vorrichtung für ein Kraftfahrzeug bekannt, bei welcher ein Überrollbügel wenigstens annähernd U-förmig mit einem Querjoch und seitlichen Schenkeln, eine Durchladeöffnung freigebend und im Wesentlichen die Fahrzeugbreite überspannend ausgebildet ist. Die seitlichen Schenkel sind zur Überführung des Überrollbügels aus einer abgesenkten Ruhelage in eine obere Stützlage entlang ortsfester Führungseinrichtungen verlagerbar. Dabei ist eine zentrale, durch einen Aktuator angesteuerte Halte- und Auslöseeinrichtung für den Überrollbügel und/oder eine die Verlagerung der Schenkel des Überrollbügels entlang der Führungseinrichtungen synchronisierende Einrichtung vorgesehen.

Wenn der Überrollbügel von der Halte- und Auslöseeinrichtung losgelassen wird, entspannt sich ein Kraftspeicher und setzt dabei den Überrollbügel in Bewegung. Infolge eines Eingriffs von Zahnprofilen einer Synchronisationswelle in Zahnleisten an den jeweiligen Schenkeln des Überrollbügels wird der Überrollbügel mit einem durch die Synchronisationswelle synchronisierten Lauf seiner Schenkel in eine obere Stützlage verschoben. In dieser oberen Stützlage wird der Überrollbügel durch beidseitig an den Schenkeln befestigte Sperrklinken, welche in ein entsprechendes, in einer Führungskassette angeordnetes Gegenstück einrasten, bei einer an dem Überrollbügel in Richtung seiner Ruhelage angreifenden Kraftangriff arretiert.

Nachteilig dabei ist jedoch, dass eine Durchladeöffnung zwischen den Schenkeln durch die Sperrklinken in gegebenenfalls unerwünschtem Umfang begrenzt ist.

Der vorliegenden Erfindung liegt daher die Aufgabe zugrunde, ein Überrollschutzsystem zur Verfügung zu stellen, bei welchem eine Durchladeöffnung in geringerem Umfang als bei aus dem Stand der Technik bekannten Überrollschutzsystemen durch das Überrollschutzsystem begrenzt ist.

Erfindungsgemäß wird diese Aufgabe mit einem Überrollschutzsystem gemäß den Merkmalen des Patentanspruches 1 gelöst.

Das erfindungsgemäße Überrollschutzsystem für ein Kraftfahrzeug, insbesondere für ein Cabriolet-Fahrzeug, ist mit einem gegenüber einem karosseriefesten ersten Modul zwischen einer abgesenkten Ruhelage in einer oberen Stützlage verlagerbaren zweiten Modul ausgeführt. Das zweite Modul weist einen sich in Fahrzeugquerrichtung erstreckenden Überrollbügel mit zwei im Wesentlichen in Fahrzeughochrichtung verlaufenden Schenkelelementen, welche durch zugeordnete Führungseinrichtungen des ersten Moduls geführt sind. Bei einer Ausfahrbewegung des zweiten Moduls werden die Schenkelelemente über eine Synchronisationseinrichtung, die eine mit an den Schenkelelementen angeordneten Rastleisten in Eingriff stehende Synchronisationswelle aufweist, gleichzeitig und synchron zueinander gegenüber den Führungseinrichtungen von einem Kraftspeicher verschoben werden.

Zudem ist eine Verriegelungsvorrichtung vorgesehen, mittels der das zweite Modul in einer von seiner Ruhelage abweichenden Position gegen einen in Richtung der Ruhelage wirkenden Kraftangriff abstützbar ist. Die Verriegelungsvorrichtung weist wenigstens eine erste Rasteinrichtung auf, die zum Abstützen des zweiten Moduls mit einer zweiten Rasteinrichtung in Wirkverbindung bringbar ist und die eine Bewegung des zweiten Moduls ausgehend von seiner Ruhelage in Richtung seiner Stützlage zulässt.

Erfindungsgemäß ist ein Rastelement der ersten Rasteinrichtung als ein Zahnprofilelement ausgeführt, welches in verriegeltem Betriebszustand der Verriegelungsvorrichtung sowohl mit der Synchronisationswelle als auch mit wenigstens einer der Rastleisten der Schenkelelemente wirkverbunden ist.

Damit ist die Verriegelungsvorrichtung bei dem erfindungsgemäßen Überrollschutzsystem im Vergleich zu der aus dem Stand der Technik bekannten Überrollschutz-Vorrichtung der DE 103 18 594 A1 aus einem dem Fahrzeugboden nahen Bereich in einen Fahrzeugbereich verschoben, der in Ruhelage des zweiten Moduls in Fahrzeugquerrichtung durch den sich in Fahrzeugquerrichtung erstreckenden Überrollbügel belegt ist. Dies führt dazu, dass eine zwischen den Führungseinrichtungen vorgesehene Durchladeöffnung bei dem erfindungsgemäßen Überrollschutzsystem gegenüber der bekannten Überrollschutz-Vorrichtung vergrößert ausgeführt sein kann.

Zusätzlich ist das erfindungsgemäße Überrollschutzsystem durch einen einfacheren konstruktiven Aufbau gekennzeichnet und weist eine geringere Bauteilanzahl auf, wodurch das Überrollschutzsystem kostengünstig herstellbar ist, einfach montierbar ist und ein geringes Modulgewicht aufweist.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele eines erfindungsgemäß ausgestalteten Überrollschutzsystems sind in der Zeichnung schematisch vereinfacht dargestellt und werden in der nachfolgenden Beschreibung näher erläutert, wobei der Übersichtlichkeit halber in der Beschreibung der Ausführungsbeispiele für bau- und funktionsgleiche Bauteile dieselben Bezugszeichen verwendet werden.

Es zeigt:
- Fig. 1: eine vereinfachte perspektivische Ansicht eines Überrollschutzsystems für ein Cabriolet-Fahrzeug in Alleinstellung;
- Fig. 2: einen in Fig. 1 näher gekennzeichneten Bereich II in einer vergrößerten Darstellung;
- Fig. 3: die Verriegelungsvorrichtung des Überrollschutzsystems gemäß Fig. 1 in einer vergrößerten Einzeldarstellung;
- Fig. 4: die Verriegelungsvorrichtung gemäß Fig. 3 in einer schematisierten Seitenansicht;
- Fig. 5: ein zweites Ausführungsbeispiel der Verriegelungsvorrichtung des Überrollschutzsystems gemäß Fig. 1; und
- Fig. 6: die Verriegelungsvorrichtung gemäß Fig. 5 in einer Fig. 5 entsprechenden freigestellten Darstellung.

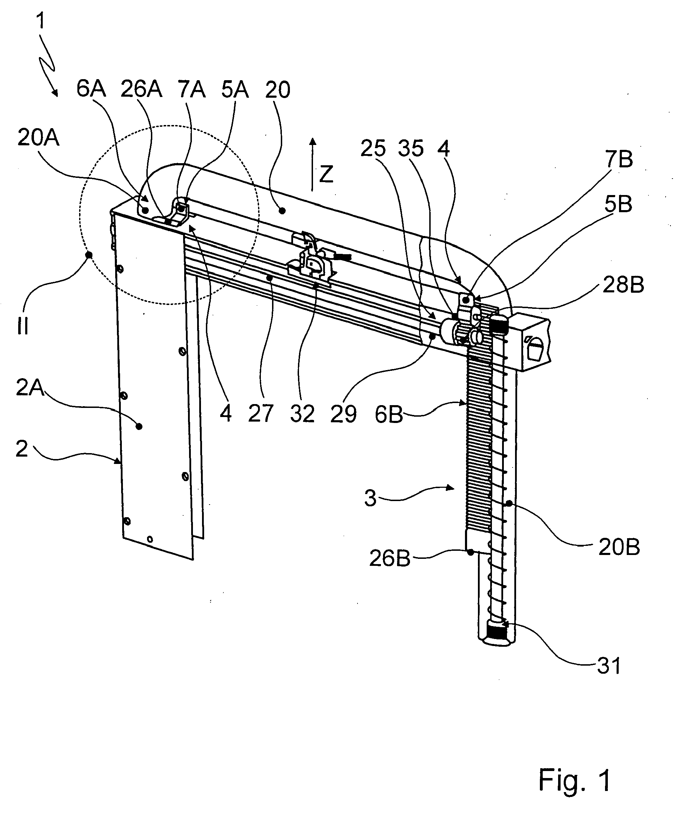

In Fig. 1 ist ein Überrollschutzsystem 1 für ein Cabriolet-Kraftfahrzeug in einer dreidimensionalen Einzelansicht dargestellt, welches mit einem gegenüber einem karosseriefesten ersten Modul 2 und einem von einer in Fig. 1 dargestellten Ruhelage in eine obere, nicht näher dargestellte Stützlage verfahrbar ausgebildeten zweiten Modul 3 ausgebildet ist, welches ein sich in Fahrzeugquerrichtung erstreckendes Aufprallelement in Form eines Überrollbügels 20 mit zwei im Wesentlichen in Fahrzeughochrichtung verlaufenden Schenkelelementen 20A und 20B aufweist.

Die Schenkelelemente 20A und 20B wirken jeweils mit einer von zwei vorliegend baugleichen Führungseinrichtungen 2A des ersten Moduls 2, von welchen in Fig. 1 nur eine dargestellt ist, teleskopartig zusammen und werden bei einer Ausfahrbewegung des zweiten Moduls 3 in eine durch einen Pfeil Z näher gekennzeichnete Bewegungsrichtung über eine Synchronisationseinrichtung 25, die wenigstens zwei mit den Schenkelelementen 20A und 20B in an sich bekannter Weise wirkverbundene Rastleisten 26A und 26B und eine mit den beiden Rastleisten über Zahnräder 28A, 28B in Eingriff stehende Synchronisationswelle 29 aufweist, gleichzeitig und synchron zueinander gegenüber den Führungseinrichtungen 2A verschoben.

Zusätzlich ist zwischen dem Überrollbügel 20 und einem in Fahrzeugquerrichtung verlaufend angeordnetem karosseriefesten Querjoch 27 eine zentrale Auslöseeinheit bzw. eine lösbare Halteeinrichtung 32 vorgesehen, mittels der der Überrollbügel 20 entgegen der Federkraft eines Kraftspeichers 31 in seiner in Fig. 1 dargestellten Ruhelage haltbar ist und im Bedarfsfall freigebbar ist, so dass der Überrollbügel 20 durch den Kraftspeicher 31 in seine Stützlage überführbar ist.

Darüber hinaus ist eine Verriegelungsvorrichtung 4 vorgesehen, mittels der das zweite Modul 3 vorzugsweise in jeder von seiner Ruhelage abweichenden Position gegen einen in Richtung der Ruhelage wirkenden Kraftangriff abstützbar ist. Dazu weist die Verriegelungsvorrichtung 4 im Bereich jedes Schenkelelementes 20A, 20B eine erste Rasteinrichtung 5A bzw. 5B auf, die zum Abstützen des zweiten Moduls 3 mit einer zweiten Rasteinrichtung 6A bzw. 6B in Wirkverbindung bringbar ist und die eine Bewegung des zweiten Moduls 3 ausgehend von seiner Ruhelage in Richtung seiner Stützlage zulässt.

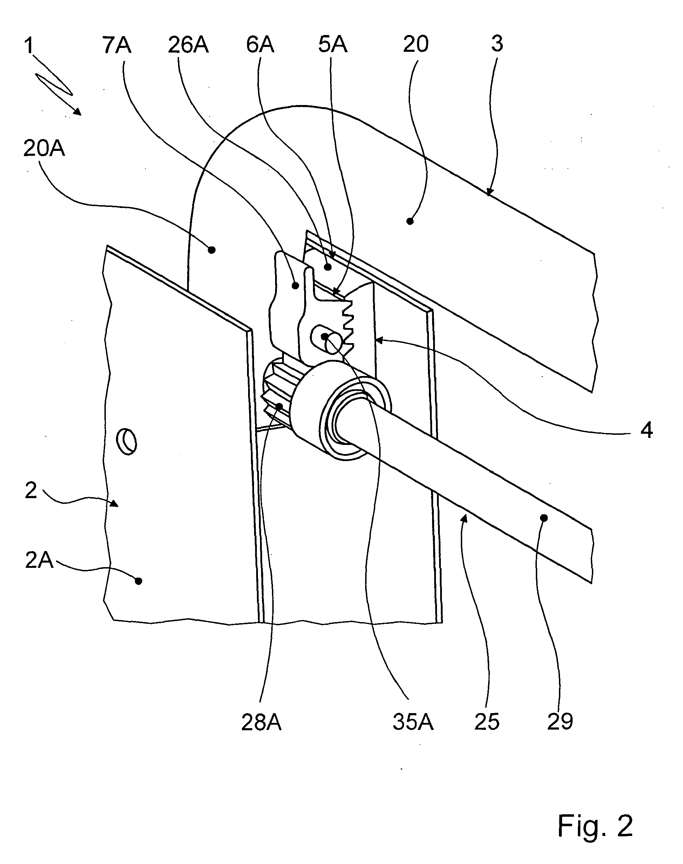

Die in Fig. 1 und Fig. 2 dargestellten ersten Rasteinrichtungen 5A, 5B weisen jeweils Rastelemente 7A, 7B auf, welche als Zahnprofilelemente ausgeführt sind und in verriegeltem Betriebszustand der Verriegelungsvorrichtung 4 gleichzeitig mit einem durch verdrehsicher auf der Synchronisationswelle angeordnete Zahnräder 28A, 28B gebildetem Zahnprofil der Synchronisationswelle 29 und mit den Rastleisten 26A, 26B in der in der Zeichnung näher dargestellten und die Verriegelungsvorrichtung 4 verriegelnden Art und Weise wirkverbunden sind.

In entriegeltem Betriebszustand der Verriegelungsvorrichtung 4 sind die Zahnprofilelemente 7A, 7B der ersten Rasteinrichtungen 5A, 5B mit den Zahnrädern 28A, 28B der Synchronisationswelle 29 wirkverbunden und außer Eingriff mit den Rastleisten 26A, 26B geführt, so dass das zweite Modul 3 ungehindert in seine Stützlage ausfahren kann.

Alternativ hierzu kann es auch vorgesehen sein, dass die Zahnprofilelemente 7A, 7B in entriegeltem Betriebszustand der Verriegelungsvorrichtung 4 weder mit der Synchronisationswelle 29 noch mit einer der Rastleisten 26A bzw. 26B wirkverbunden sind.

Die beiden Führungseinrichtungen 2A des Überrollschutzsystems 1, die neben der Führungsfunktion für die Schenkelelemente 20A, 20B auch eine Abdeckfunktion übernehmen, sind durch das parallel zu dem Überrollbügel 20 in Fahrzeugquerrichtung verlaufende und als Strangpresshohlprofil ausgebildete Querjoch 27 fest verbunden, wobei in dem Querjoch 27 die Synchronisationswelle 29 der Synchronisationseinrichtung 25 angeordnet und drehbar gelagert ist.

Die Synchronisationswelle 29 steht über ihre Zahnräder 28A, 28B jeweils mit den mit den Schenkelelementen 20A und 20B fest verbundenen Rastleisten 26A und 26B in Eingriff, um beide Seiten des zweiten Moduls 3 in Fahrzeughochrichtung nach oben oder unten synchronisiert bewegen zu können.

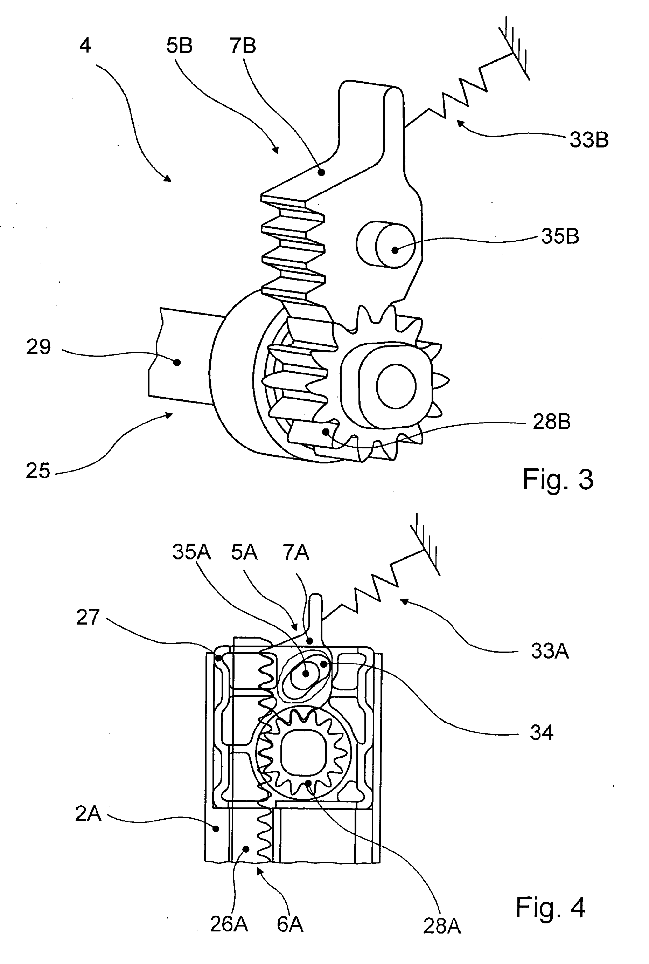

Beim Ausfahren des Überrollbügels 20 werden somit neben dem Überrollbügel 20 und dessen Schenkelelementen 20A und 20B auch die beiden damit fest verbundenen Rastleisten 26A und 26B in Ausfahrrichtung Z verschoben. Da die beiden Zahnräder 28A, 28B der Synchronisationswelle 29 mit den Rastleisten 26A und 26B in Eingriff stehen, werden die Zahnräder 28A, 28B in Rotation versetzt und die Zahnprofilelemente 7A, 7B der ersten Rasteinrichtungen 5A, 5B entgegen der Federwirkung von in Fig. 3 und Fig. 4 dargestellten Federeinrichtungen 33A, 33B aus dem Eingriff mit den Rastelemente der zweiten Rasteinrichtungen 6A und 6B darstellenden Rastleisten 26A und 26B geführt.

Dabei werden die Zahnprofilelemente 7A, 7B gesteuert aus dem Eingriff mit den Rastleisten 26A und 26B geführt, wobei die Zahnprofilelemente 7A, 7B jeweils fest mit einem Führungselement 35A, 35B verbunden sind, das in einer wenigstens annähernd bogenförmigen Steuerkurve 34 verschieblich ist. Die Steuerkurve 34 ist in einem fest mit dem Querjoch 27 oder mit den Führungselementen 2A verbundenen Bauteil oder darin selbst ausgebildet.

Um eine Rotation der Zahnprofilelemente 7A und 7B gegenüber der Synchronisationswelle 29 bzw. den Zahnrädern 28A, 28B zu vermeiden, sind die Führungselemente 35A, 35B in der in Fig. 4 dargestellten Art und Weise annähernd ellipsoid ausgebildet. Damit folgen die Zahnprofilelemente 7A, 7B bei einer Rotation der Synchronisationswelle 29 den durch die Steuerkurven 34 vorgegebenen Kurvenbahnen und werden ohne Rotation entweder aus dem Eingriff mit den Rastleisten 26A und 26B oder in Eingriff mit diesen gebracht.

Dabei ist die Länge der Steuerkurven 34 derart dimensioniert, dass die Zahnprofilelemente 7A und 7B im Auslösefall des Überrollschutzsystems 1 durch die Zahnräder 28A, 28B zunächst aus dem Eingriff mit den Rastleisten 26A und 26B geführt werden. Bei weiterer Rotation der Zahnräder 28A, 28B werden die Rastelemente 7A und 7B zusätzlich derart aus dem Eingriff mit den Zahnrädern 28A, 28B geführt, dass die Zahnprofilelemente 7A und 7B keine weitere gesteuerte Verschiebung und/oder Verkippung erfahren, während die Zahnräder 28A, 28B mit ihren Zähnen an den damit korrespondierenden Zahnprofilen der Zahnprofilelemente 7A und 7B unter Kontakt vorbeigeführt werden.

Im Stillstand des Überrollbügels 20 werden die Zahnprofilelemente 7A und 7B durch die Federeinrichtungen 33A, 33B, deren Kraftrichtungen vorzugsweise wenigstens annähernd parallel zu den Verläufen der Steuerkurven 34 sind, in Richtung der Zahnräder 28A, 28B gedrückt, so dass sich die Zahnprofilelemente 7A und 7B auf jeden Fall in einer derartigen Wirkposition befinden, dass sie bei einem Kraftangriff an dem Überrollbügel 20 in Richtung seiner Ruhelage sich sofort wieder in Eingriff mit den Zahnrädern 28A, 28B befinden. Damit ist gewährleistet, dass die Rastelemente 7A, 7B bei einer Einfahrbewegung des Überrollbügels 20 in Richtung seiner Ruhelage und einer damit korrespondierenden Rotation der Zahnräder 28A, 28B von diesen umgehend in Eingriff mit den Rastleisten 26A und 26B geführt werden und die Verriegelungsvorrichtung 4 in ihren verriegelten Betriebszustand überführt wird, wodurch ein unerwünschtes Einfahren des Überrollbügels 20 in Richtung seiner Ruhelage sicher vermieden ist.

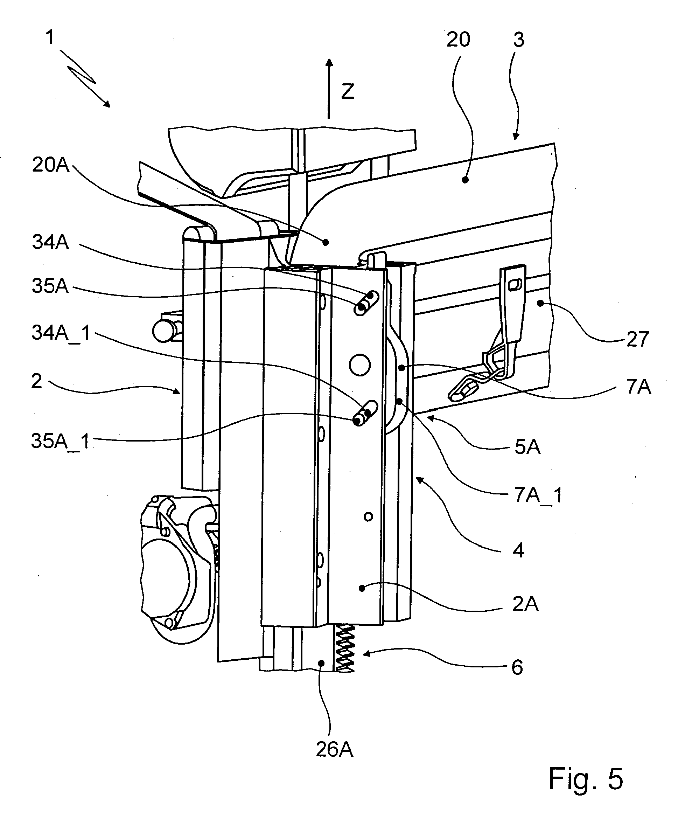

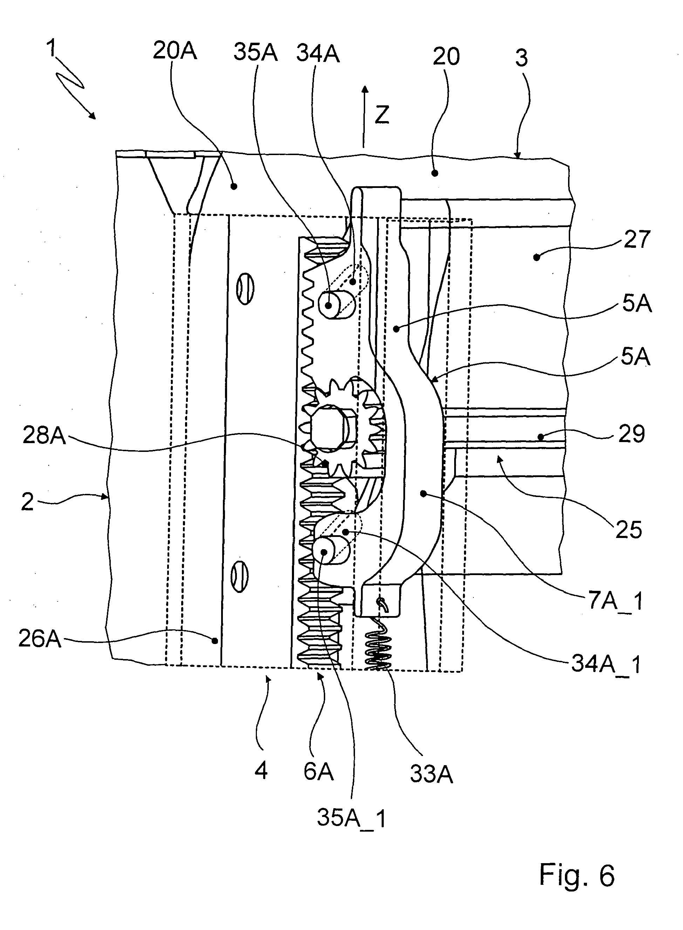

In Fig. 5 und Fig. 6 ist ein zweites Ausführungsbeispiel des erfindungsgemäßen Überrollschutzsystems 1 dargestellt, welches sich von dem in Fig. 1 bis Fig. 4 dargestellten Überrollschutzsystem im Wesentlichen im Bereich der Verriegelungsvorrichtung 4 unterscheidet, weshalb in der nachfolgenden Beschreibung im Wesentlichen auf die Unterschiede eingegangen wird und im Übrigen auf die vorstehende Beschreibung verwiesen wird.

Das in Fig. 5 und Fig. 6 dargestellte Rastelement 7A der ersten Rasteinrichtung 5A entspricht in einem in Ausfahrrichtung Z oberhalb des Zahnrades 28A angeordneten Bereich im Wesentlichen dem Rastelement 7A des ersten Ausführungsbeispiels des Überrollschutzsystems 1. An diesen oberen Bereich schließt sich ein weiterer bügelartig ausgebildeter Rastelementbereich 7A_1 an, der das Zahnrad 28A der Synchronisationseinrichtung 25 halbbogenförmig umgreift und mit einem weiteren Führungselement 35A_1 in eine weitere Steuerkurve 34A_1 eingreift, so dass das Rastelement 7A in Bezug auf die Ausfahrrichtung Z des Überrollbügels 20 sowohl oberhalb als auch unterhalb des Zahnrades 28A in die Steuerbahnen 34A und 34A_1 gesteuert in und außer Eingriff mit der Rastleiste 26A führbar ist.

Die Federeinrichtung 33A ist vorliegend als Zugfeder ausgeführt, welche auf einer dem Zahnrad 28A abgewandten Ende des bügelförmigen Bereichs 7A_1 des Rastelementes 7A angreift. Die Kraftwirkungsrichtung der Federeinrichtung 33A an dem Rastelement 7A ist vorliegend der Ausfahrrichtung Z des Aufprallelementes 20 entgegengerichtet, so dass das Rastelement 7A in derselben Art und Weise wie das Rastelement 7A des ersten Ausführungsbeispiels des Überrollschutzsystems 1 in Abhängigkeit einer Rotation der Synchronisationswelle 29 in Eingriff oder aus dem Eingriff mit der Rastleiste 26A führbar ist und die Verriegelungsvorrichtung 4 in einen verriegelten oder einen entriegelten Betriebszustand überführt wird.

Damit das zweite Modul 3 ausgehend von seiner Stützlage, in der das zweite Modul 3 mit seinem Überrollbügel 20 einen Sitzbereich eines oder mehrerer Fahrzeuginsassen derart überragt, dass für die Fahrzeuginsassen bei einem Fahrzeugüberschlag durch das Schutzelement in an sich bekannter Art und Weise ein Überlebensraum gewährleistet ist, in seine Ruhelage, in der das zweite Modul 3 vorzugsweise in Bezug auf eine Rückenlehne eines Fahrzeugsitzes derart abgesenkt ist, dass das zweite Modul 3 die Rücksitzlehne nicht überragt, wieder absenkbar ist, ist die Wirkverbindung zwischen den Rasteinrichtungen 5 und 6 zur gewollten Absenkbewegung des zweiten Moduls 3 in Richtung seiner Ruhelage beispielsweise durch ein geeignetes Löseelement wieder aufhebbar.

## Patentansprüche

1. Überrollschutzsystem (1) für ein Kraftfahrzeug, insbesondere für ein Cabriolet-Fahrzeug, mit einem gegenüber einem karosseriefesten ersten Modul (2) zwischen einer abgesenkten Ruhelage und einer oberen Stützlage verlagerbaren zweiten Modul (3), welches einen sich in Fahrzeugquerrichtung erstreckenden Überrollbügel (20) mit zwei im Wesentlichen in Fahrzeughochrichtung verlaufenden Schenkelelementen (20A, 20B) aufweist, welche durch zugeordnete Führungseinrichtungen (2A) des ersten Moduls (2) geführt sind, wobei eine die Verlagerung der Schenkelelemente (20A, 20B) entlang der Führungseinrichtungen (2A) synchronisierende Synchronisationseinrichtung (25) vorgesehen ist, welche eine Synchronisationswelle (29) aufweist, die mit einem Zahnprofil (28A, 28B) jeweils mit einer an jedem Schenkelelement (20A, 20B) ausgebildeten Rastleiste (26A, 26B) in Eingriff steht, und wobei eine Verriegelungsvorrichtung (4), mittels der das zweite Modul (3) in einer von seiner Ruhelage abweichenden Position gegen einen in Richtung der Ruhelage wirkenden Kraftangriff abstützbar ist, wenigstens eine erste Rasteinrichtung (5A, 5B) aufweist, die zum Abstützen des zweiten Moduls (3) mit einer zweiten Rasteinrichtung (6A, 6B) in Wirkverbindung bringbar ist und eine Bewegung des zweiten Moduls (3) ausgehend von seiner Ruhelage in Richtung seiner Stützlage zulässt,
**dadurch gekennzeichnet,**
**dass** ein Rastelement (7A, 7B) der ersten Rasteinrichtung (5A, 5B) als ein Zahnprofilelement ausgeführt ist, welches in verriegeltem Betriebszustand der Verriegelungsvorrichtung (4) sowohl mit der Synchronisationswelle (29) als auch mit wenigstens einer der Rastleisten (26A, 26B) der Schenkelelemente (20A, 20B) wirkverbunden ist.

2. Überrollschutzsystem nach Anspruch 1,
**dadurch gekennzeichnet,**
**dass** das Zahnprofilelement (7A, 7B) in entriegeltem Betriebszustand der Verriegelungsvorrichtung (4) mit der Synchronisationswelle (29) oder mit wenigstens einer der Rastleisten wirkverbunden ist.

3. Überrollschutzsystem nach Anspruch 1,
**dadurch gekennzeichnet,**
**dass** das Zahnprofilelement in entriegeltem Betriebszustand der Verriegelungsvorrichtung weder mit der Synchronisationswelle noch mit einer der Rastleisten wirkverbunden ist.

4. Überrollschutzsystem nach einem der Ansprüche 1 bis 3,
**dadurch gekennzeichnet,**
**dass** das Zahnprofilelement (7A, 7B) in Richtung seiner zu dem verriegelten Betriebszustand der Verriegelungsvorrichtung (4) äquivalenten Wirkposition angefedert ist.

5. Überrollschutzsystem nach einem der Ansprüche 1 bis 4,
**dadurch gekennzeichnet,**
**dass** das Zahnprofilelement (7A, 7B) mit wenigstens einem Führungselement (35A, 35B) derart in mindestens einer wenigstens annähernd bogenförmigen Steuerkurve (34A, 34B) angeordnet ist, dass es bei einer Einfahrbewegung des zweiten Moduls (3) gesteuert in Eingriff mit der Synchronisationswelle (29) und mit einer der Rastleisten (26A, 26B) geführt wird.

6. Überrollschutzsystem nach Anspruch 5,
**dadurch gekennzeichnet,**
**dass** das Führungselement (35A, 35B) im Querschnitt wenigstens annähernd derart ellipsoid ausgebildet ist, dass eine Rotation des Zahnprofilelementes (7A, 7B) gegenüber der Synchronisationswelle (29) und/oder der Rastleiste (26A, 26B) unterbleibt.

7. Überrollschutzsystem nach einem der Ansprüche 1 bis 6,
**dadurch gekennzeichnet,**
**dass** das Zahnprofil der Synchronisationswelle (29) durch verdrehfest an der Synchronisationswelle (29) angeordnete Zahnräder (28A, 28B) gebildet ist.
